# EUROPÄISCHE PATENTANMELDUNG

(11) **EP 0 897 836 A1**
(43) Veröffentlichungstag der Anmeldung: **24.02.1999**
(21) Anmeldenummer: 98115176.4
(22) Anmeldetag: 12.08.1998
(51) Int. Cl.: B60R 21/16

(54) **Sicherheitsvorrichtung für ein Kraftfahrzeug**

(30) Priorität: 20.08.1997 DE 19736200
(71) Anmelder: TAKATA (EUROPE) VEHICLE SAFETY TECHNOLOGY GmbH, 89081 Ulm (DE)
(72) Erfinder: Heudorfer, Benedikt, 89278 Nersingen (DE); Glöckler, Oliver, 89197 Weidenstetten (DE); Einsiedel, Heinrich, 89073 Ulm (DE)
(74) Vertreter: Finsterwald, Martin, Dr.

(57) **Zusammenfassung**

Die Erfindung betrifft eine Sicherheitsvorrichtung für ein Kraftfahrzeug mit einem Gasgenerator (13) zum Aufblasen eines Luftsacks (15) und einer Straffereinrichtung zum Bewegen wenigstens eines Zugmittels, wobei die Straffereinrichtung durch Zünden des Gasgenerators (13) auslösbar ist.

## Beschreibung

Die Erfindung betrifft eine Sicherheitsvorrichtung für ein Kraftfahrzeug mit einem Gasgenerator zum Aufblasen eines Luftsacks.

Bei derartigen Sicherheitsvorrichtungen wird im Falle des Aufprallens des Kraftfahrzeuges an einem Hindernis oder des Anprallens eines Objektes an dem Kraftfahrzeug der Gasgenerator gezündet, so daß er durch Abgabe von Gas den Luftsack aufbläst. Entsprechend seiner Formgebung nimmt der aufgeblasene Luftsack eine bestimmte Lage innerhalb des Kraftfahrzeuges ein, und er blockiert oder dämpft die Bewegung der Fahrzeuginsassen, insbesondere deren Köpfe, und schützt sie vor mechanischer Einwirkung vom Fahrzeugäußeren.

Da die möglichen Positionen, an denen die Sicherheitsvorrichtungen innerhalb des Kraftfahrzeuges angebracht werden können, beschränkt sind, sind bei bekannten Sicherheitsvorrichtungen die Lage und die Ausdehnung des aufgeblasenen Luftsacks nicht beliebig durch die Form des Luftsacks vorgebbar oder nicht schnell genug erreichbar. Dieser Nachteil tritt vor allem bei Sicherheitsvorrichtungen auf, die nicht nahe des Zentrums der gewünschten Lage des aufgeblasenen Luftsacks angebracht sind, insbesondere bei Sicherheitsvorrichtungen zum Aufblasen von Seiten-Luftsäcken.

Es ist eine Aufgabe der Erfindung, eine Sicherheitsvorrichtung zu schaffen, die bei geringem Herstellungs- und Montageaufwand die Sicherheit der Fahrzeuginsassen bei Aufprall- oder Anprallunfällen des Kraftfahrzeuges erhöht.

Erfindungsgemaß wird die Aufgabe dadurch gelöst, daß die Sicherheitsvorrichtung eine Straffereinrichtung zum Bewegen wenigstens eines Zugmittels aufweist, wobei die Straffereinrichtung durch Zünden des Gasgenerators auslösbar ist.

Die Ausgestaltung der Sicherheitsvorrichtung mit der Straffereinrichtung ermöglicht es, durch Bewegen des Zugmittels bei einem Unfall des Kraftfahrzeuges ein innerhalb des Fahrzeuges angebrachtes Sicherheitsmittel zu bewegen. Insbesondere kann der Luftsack durch das Zugmittel vor oder während des Aufblasens bewegt werden. Hierdurch ist es begünstigt, die Sicherheitsvorrichtung an einer Position innerhalb des Fahrzeugs anzuordnen, die nicht im Zentrum des aufgeblasenen Luftsacks liegt, da im Falle eines Unfalls aufgrund der Bewegung des Luftsacks bei einer entsprechenden Formgebung des Luftsacks dennoch eine die Sicherheit der Fahrzeuginsassen gewährleistende Lage und Ausdehnung des aufgeblasenen Luftsacks erreicht wird.

Durch die erfindungsgemäße Sicherheitsvorrichtung kann das Entfalten des Luftsacks unterstützt werden; das Aufblasen des Luftsacks kann schneller und zuverlässiger erfolgen. Die Sicherheitsvorrichtung bewirkt somit eine Verbesserung der Sicherheit der Fahrzeuginsassen, und sie verringert Einschränkungen der möglichen Anordnungspositionen des Gasgenerators bezüglich der gewünschten Lage des aufgeblasenen Luftsacks.

Wenn die Straffereinrichtung durch Zünden des Gasgenerators ausgelöst werden kann, kann die Sicherheitsvorrichtung mit besonders geringem konstruktiven Aufwand hergestellt werden, und die Straffereinrichtung und der Gasgenerator können einen kompakten integrierten Aufbau aufweisen. Die Zuverlässigkeit der Sicherheitsvorrichtung wird erhöht, da die Straffereinrichtung einzig durch Zünden des Gasgenerators ausgelöst wird, nicht jedoch durch einen eigenen unabhängigen Auslösemechanismus. Außerdem sind hierdurch neuartige Anordnungen der Sicherheitsvorrichtung innerhalb des Kraftfahrzeuges möglich, insbesondere falls das Zugmittel das Straffen eines Sicherheitsgurtes bewirken soll.

In einer vorteilhaften Ausführungsform der Sicherheitsvorrichtung kann die Straffereinrichtung durch Druck, mechanische Krafteinwirkung oder durch Wärme ausgelöst werden. Dadurch ist der Aufbau des Auslösemechanismus besonders einfach; insbesondere kann das Auslösen der Straffereinrichtung auf besonders einfache Weise durch Zünden des Gasgenerators bewirkt werden.

Weiterhin ergibt sich ein einfacher und kompakter Aufbau der Sicherheitsvorrichtung, wenn die ausgelöste Straffereinrichtung durch den vom Gasgenerator erzeugten Gasdruck bewegt wird. In diesem Fall dient das vom Gasgenerator abgegebene Gas nicht nur zum Aufblasen des Luftsacks, sondern auch zur Bewegung der Straffereinrichtung, so daß hierfür kein eigener Antriebsmechanismus vorgesehen werden muß.

Es ist auch möglich, die Straffereinrichtung durch Auslösen eines Druckspeichers zu bewegen. In diesem Fall steht der vom Gasgenerator erzeugte Gasdruck vollständig zum Aufblasen des Luftsacks zur Verfügung, und der Druckspeicher kann in Aufbau und Wirkung dem Antrieb des Zugmittels optimal angepaßt werden. Der Druckspeicher kann insbesondere eine vorgespannte Feder aufweisen, an der das Zugmittel befestigt ist.

Es ist bevorzugt, wenn die Sicherheitsvorrichtung nicht nur einen Verbindungskanal besitzt, durch den der Gasgenerator mit einer Öffnung, an der ein Luftsack befestigt werden kann, in Strömungsverbindung steht, sondern auch einen Verbindungskanal, durch den der Gasgenerator mit der Straffereinrichtung in Strömungsverbindung, mechanischer oder thermischer Wirkverbindung steht, um das Auslösen oder Bewegen der Straffereinrichtung bewirken zu können. Die beiden Verbindungskanäle können mit derselben Auslaßöffnung des Gasgenerators oder miteinander verbunden sein.

Die Straffereinrichtung kann einen Kolben aufweisen, der über einen Verbindungskanal mit einer Auslaßöffnung des Gasgenerators in Strömungsverbindung steht. Mittels des Kolbens kann durch vom Gasgenerator abgegebenes Gas eine Bewegung eines an dem Kolben befestigten Zugmittels bewirkt werden. Durch den Kolben kann in vorteilhafter Weise gewährleistet werden, daß der sich an die Auslaßöffnung des Gasgenerators anschließende Raum trotz des Antriebs eines Zugmittels dicht ist gegenüber dem vom Gasgenerator abgegebenen Gas.

Das Zugmittel weist bevorzugt eine Kolbenstange, ein Strafferseil oder ein Strafferband auf, die jeweils bewegt werden können und hierfür insbesondere mit dem Kolben der Straffereinrichtung oder der vorgespannten Feder verbunden sind.

Falls das Zugmittel innerhalb derselben Öffnung geführt wird, die auch zur Befestigung des Luftsacks an der Sicherheitsvorrichtung vorgesehen ist, ist für das Führen des Zugmittels keine eigene Öffnung erforderlich, die gegebenenfalls gegen unbeabsichtigtes Ausströmen von Gas abgedichtet werden muß. Allerdings ist es auch möglich, das Zugmittel innerhalb einer eigenen Öffnung zu führen, so daß die Bewegungsrichtung des Zugmittels leichter der Anwendung der Sicherheitsvorrichtung angepaßt werden kann. Falls das Zugmittel innerhalb der Sicherheitsvorrichtung in Strömungsverbindung mit der Auslaßöffnung des Gasgenerators steht, ist die Öffnung, durch die das Zugmittel geführt ist, gegen ein Durchströmen mit Gas im wesentlichen abgedichtet.

In einer besonders vorteilhaften Ausführungsform der Sicherheitsvorrichtung ist eine Steuerung vorgesehen, die den zeitlichen Ablauf des Aufblasens des Luftsacks und der Bewegung der Straffereinrichtung steuert. Die Steuerung kann beispielsweise bewirken, daß nach Zünden das Gasgenerators zunächst im wesentlichen die Straffereinrichtung bewegt wird und erst anschließend der Luftsack aufgeblasen wird, oder daß umgekehrt zunächst der Luftsack zu einem großen Teil aufgeblasen und nachfolgend die Straffereinrichtung bewegt wird. Hierdurch ist es also möglich, den Luftsack vor, während oder nach dem Aufblasen in eine für den Aufblasvorgang oder die Sicherheitsfunktion des Luftsacks zuträgliche Lage zu bewegen.

Die Steuerung kann insbesondere durch eine Öffnung gebildet sein, die ein Durchströmen mit vom Gasgenerator abgegebenen Gas ermöglicht, sowie durch ein Schließelement, das in Abhängigkeit von der Position des Zugmittels ein Durchströmen der Öffnung freigibt, behindert oder verhindert. Das Schließelement steuert somit das Aufblasen des Luftsacks entsprechend der Position des Zugmittels.

Weiterhin ist es von Vorteil, wenn die Sicherheitsvorrichtung einen Rückhaltemechanismus aufweist, durch den die Straffereinrichtung oder das Zugmittel in einer ausgelösten Position fixiert wird. Durch den Rückhaltemechanismus kann eine Rückbewegung der bewegten Straffereinrichtung bzw. des bewegten Zugmittels oder deren Rückschlag verhindert werden. Insbesondere kann der Rückhaltemechanismus einen Kolben oder eine Feder, an dem bzw. der das Zugmittel befestigt ist, in seiner Zielposition fixieren.

In einer vorteilhaften Ausführungsform verfügt die Sicherheitsvorrichtung über einen Bimetallstreifen, auf den nach dem Zünden das Gasgenerators Wärme übertragen werden kann, so daß der Bimetallstreifen einen Druckspeicher zur Bewegung der Straffereinrichtung auslöst. Alternativ hierzu kann die Sicherheitsvorrichtung auch einen Schließhaken oder einen Kipphebel aufweisen, der nach Druck- oder Kraftübertrag durch den gezündeten Gasgenerator den Druckspeicher auslöst.

Es ist bevorzugt, daß das Zugmittel an einem Luftsack befestigt ist, der sich mit dem Gasgenerator in Strömungsverbindung befindet, so daß das Zugmittel den Luftsack vor oder während des Aufblasens spannt. Der Luftsack kann insbesondere an einer weiteren Position innerhalb des Kraftfahrzeugs dergestalt befestigt sein, daß mit Hilfe dieses zusätzlichen Angriffspunkts der Luftsack von der Sicherheitsvorrichtung besonders leicht in die gewünschte Lage gebracht werden kann.

Es ist jedoch auch möglich, daß das Zugmittel an einem Straffermittel eines Sicherheitsgurts angreift. In diesem Falle erfolgt das Aufblasen des Luftsacks und das Straffen des Sicherheitsgurts durch die Sicherheitsvorrichtung, und es entfällt die Notwendigkeit, hierfür zwei separate Vorrichtungen vorzusehen. Natürlich ist es auch möglich, ein Zugmittel an einem Straffermittel eines Sicherheitsgurtes und ein weiteres Zugmittel an einem Luftsack angreifen zu lassen.

Schließlich bezieht sich die Erfindung auch auf die Verwendung einer bekannten Luftsackvorrichtung, die einen Luftsack und einen Gasgenerator zum Aufblasen des Luftsacks aufweist, zur Betätigung einer zugeordneten Straffereinrichtung, die das Spannen des Luftsacks oder eines Sicherheitsgurts erwirkt.

Weitere bevorzugte Ausführungsformen der Erfindung sind in den Unteransprüchen beschrieben. Die Erfindung wird nachfolgend anhand von Ausführungsbeispielen unter Bezugnahme auf die Zeichnungen beschrieben; in diesen zeigen:
- Fig. 1: eine schematische Schnittdarstellung einer erfindungsgemäßen Sicherheitsvorrichtung,
- Fig. 2: eine schematische Schnittdarstellung einer weiteren erfindungsgemäßen Sicherheitsvorrichtung, und
- Fig. 3: eine schematische Seitenansicht eines Kraftfahrzeuges mit zwei darin angeordneten Sicherheitsvorrichtungen.

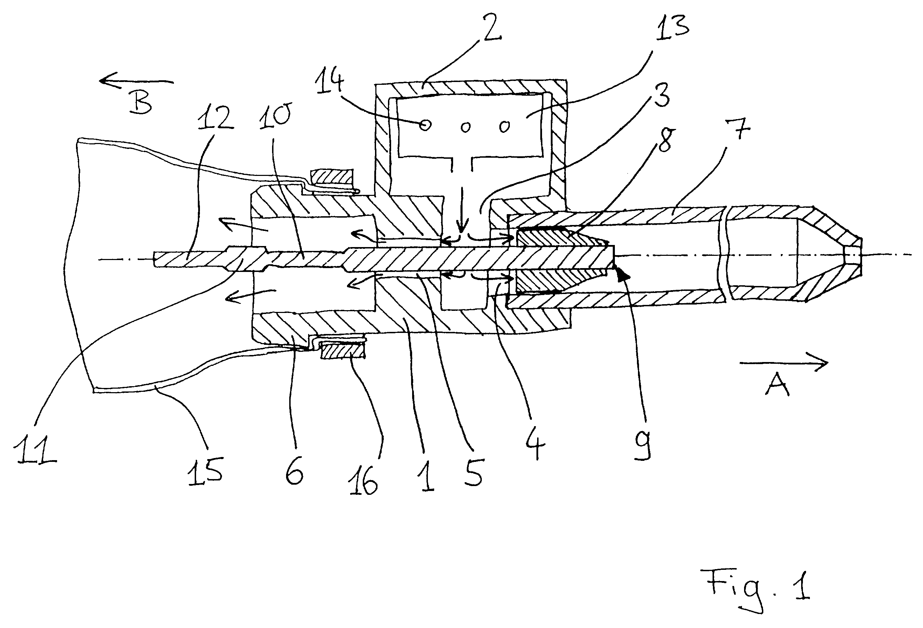

Fig. 1 zeigt schematisch einen Schnitt durch eine erste Ausführungsform einer erfindungsgemäßen Sicherheitsvorrichtung. Diese besitzt ein nahezu rotationssymmetrisches hohlzylinderförmiges Rohrgehäuse 1 und ein im wesentlichen quaderförmiges Generatorgehäuse 2, das an seiner einzigen offenen Seitenfläche mit der Mantelfläche des Rohrgehäuses 1 verbunden ist.

Das Rohrgehäuse 1 und das Generatorgehäuse 2 besitzen an ihrer durch einen Teil der Mantelfläche des Rohrgehäuses 1 gebildeten gemeinsamen Seitenwand eine gemeinsame Verbindungsöffnung 3, durch die ihre jeweiligen Innenräume miteinander verbunden sind. Die beiden Stirnseiten des Rohrgehäuses 1 sind offen.

Innerhalb des Rohrgehäuses 1 befinden sich ein an die Verbindungsöffnung 3 anschließender und in eine Richtung A einer Stirnseite des Rohrgehäuses 1 verlaufender Straffer-Verbindungskanal 4 sowie ein an die Verbindungsöffnung 3 anschließender und in einer Richtung B der anderen Stirnseite verlaufender Luftsack-Verbindungskanal 5. Die beiden Verbindungskanäle 4, 5 sind dadurch gebildet, daß das Rohrgehäuse 1 an seiner Innenseite entlang eines jeweils an die Verbindungsöffnung 3 anschließenden Bereichs der Längsachse des Rohrgehäuses 1 einen verringerten Innendurchmesser aufweist.

An dem in der Richtung B gelegenen Ende des Rohrgehäuses 1 vergrößert sich der Außendurchmesser des Gehäuses 1 zu einem Flansch 6. An dem in Richtung A gelegenen Ende des Rohrgehäuses 1 ist ein an dessen Innenwandung und an der Begrenzung des Straffer-Verbindungskanals 4 anliegendes hohlzylindrisches Laufrohr 7 eingesetzt. Das Laufrohr 7 ragt ein großes Stück aus dem Rohrgehäuse 1 heraus. An seiner dem Rohrgehäuse 1 zugewandten Stirnseite ist es offen, und sein Innendurchmesser entspricht dort dem Innendurchmesser des Straffer-Verbindungskanals 4. Das gegenüberliegende Ende des Laufrohres 7 verjüngt sich zu einer offenen Spitze.

Innerhalb des Laufrohrs 7, an seinem dem Rohrgehäuse 1 zugewandten Ende befindet sich ein Kolben 8. Der Kolben 8 ist im wesentlichen als Zylinder ausgebildet, dessen Mantelfläche zu einer Hälfte an der Innenwand des Laufrohrs 7 anliegt und zur anderen Hälfte sich in Richtung A konisch verjüngt. Innerhalb des Kolbens 8 befindet sich eine Kolbenstange 9, die sich entlang der Verbindungskanäle 4, 5 erstreckt und aus dem Rohrgehäuse 1 in Richtung B herausragt. Das Laufrohr 7, der Zylinder 8, die Kolbenstange 9 und das Rohrgehäuse 1 besitzen eine gemeinsame Längsachse.

Entlang axialer Abschnitte 10 und 12 weist die Kolbenstange 9 einen verjüngten Durchmesser auf, wobei zwischen diesen Abschnitten 10 und 12 ein Abschnitt 11 vorgesehen ist, der nicht verjüngt ist.

Innerhalb des Generatorgehäuses 2 befindet sich ein in Fig. 1 schematisch dargestellter Gasgenerator 13. Dieser besitzt mehrere Auslaßöffnungen 14 für Gas.

An dem in Richtung B weisenden Ende des Rohrgehäuses 1 ist ein Luftsack 15 angebracht, dessen Öffnung den Flansch 6 umschließt, so daß der die Luftsacköffnung umgebende Bereich des Luftsacks von einer dem Flansch 6 benachbarten Ringklemme 16 an das Rohrgehäuse 1 angepreßt wird.

Die in Fig. 1 dargestellte Sicherheitsvorrichtung dient zum Bewegen, Aufblasen und Straffen des Luftsacks 15. In Fig. 1 ist der Bereitschaftszustand der Sicherheitsvorrichtung gezeigt, in dem der nicht dargestellte Teil des Luftsacks 15 zusammengefaltet innerhalb eines Behältnisses gelagert ist. Nach Detektion eines Aufpralls oder Anpralls wird der Gasgenerator 13 von einer bekannten Zündvorrichtung gezündet, so daß er über die Auslaßöffnungen 14 Gas abgibt. Das Gas strömt zum Teil durch den Straffer-Verbindungskanal 4 in Richtung des Kolbens 8. Zum anderen Teil strömt es durch den Luftsack-Verbindungskanal 5 und den restlichen Innenraum des Rohrgehäuses 1 in den Luftsack 15, so daß es diesen aufbläst. Die Strömungsrichtungen des Gases sind in Fig. 1 durch Pfeile angedeutet.

Durch den Druck des Gases wird der Kolben 8 und die daran befestigte Kolbenstange 9 innerhalb des Laufrohrs 7 in Richtung A bewegt. Am Ende 12 der Kolbenstange 9 ist ein in Fig. 1 nicht dargestelltes Strafferseil befestigt, das an seinem anderen Ende mit dem Luftsack 15 verbunden ist. Durch die Bewegung des Kolbens 8, der Kolbenstange 9 und des Strafferseils wird der Luftsack 15 simultan zu seinem Aufblasen aktiv bewegt.

Die Ausgestaltung des Durchmessers der Kolbenstange 9 steuert die zeitliche Abfolge der Bewegung und des Aufblasens des Luftsacks 15: In dem in Fig. 1 dargestellten Bereitschaftszustand der Sicherheitsvorrichtung weist der Abschnitt der Kolbenstange 9, der sich innerhalb des Luftsack-Verbindungskanals 5 befindet, einen Durchmesser auf, der nur wenig geringer ist als der Innendurchmesser des Kanals 5. Dadurch ist nach Zünden des Gasgenerators 13 das Durchströmen des Kanals 5 mit Gas zunächst behindert, und das Gas strömt hauptsächlich durch den Straffer-Verbindungskanal 4, der einen größeren Innendurchmesser besitzt als der Kanal 5. Somit werden zu Beginn des Betriebs der Sicherheitsvorrichtung von dem abgegebenen Gas der Kolben 8 und somit die Kolbenstange 9, das Strafferseil und der Luftsack 15 in verstärktem Maße bewegt. Diese Bewegung des Luftsacks 15 kann beispielsweise derart gerichtet sein, daß sie das nachfolgende Aufblasen des Luftsacks erleichtert.

Nachdem der Kolben 8 von dem Gas um eine bestimmte Länge in Richtung A bewegt worden ist, befindet sich der Abschnitt 10 der Kolbenstange 9 innerhalb des Kanals 5. Entlang des Abschnitts 10 weist die Kolbenstange 9 einen geringeren Durchmesser auf, so daß das Durchströmen des Kanals 5 mit vom Gasgenerator 13 abgegebenen Gas erleichtert wird. Somit wird nun durch den freigesetzten Gasdruck hauptsächlich der Luftsack 15 aufgeblasen, während der Kolben 8 und somit auch das an der Kolbenstange 9 befestigte Strafferseil nur vergleichsweise langsam bewegt wird.

Nachdem auf diese Weise die Kolbenstange 9 so weit in Richtung A bewegt worden ist, daß ihr Abschnitt 11 sich innerhalb des Luftsack-Verbindungskanals 5 befindet, wird das Durchströmen des Kanals 5 erneut behindert. Dadurch wird der Kolben 8 in wiederum stärkerem Maße zu einer Bewegung in Richtung A gezwungen. Die daraus resultierende Bewegung des Strafferseils und des daran befestigten Luftsacks 15 kann ausgenutzt werden, um den bereits teilweise aufgeblasenen Luftsack 15 in eine gewünschte Position zu bringen oder ihn zu straffen.

Nachdem durch diese Bewegung des Kolbens 8 auch der Abschnitt 11 der Kolbenstange den Kanal 5 durchlaufen hat, befindet sich das Kolbenstangen-Ende 12 innerhalb des Kanals 5. Das Ende 12 besitzt einen geringeren Durchmesser, so daß das Durchströmen des Kanals 5 erneut begünstigt wird und der Luftsack 15 schließlich vollständig aufgeblasen wird.

Auch der Durchmessers jenes Abschnitts der Kolbenstange 9, der sich jeweils innerhalb des Straffer-Verbindungskanals 4 befindet, trägt auf ähnliche Weise zur Steuerung des Ablaufs des Aufblasens und des Bewegens des Luftsacks bei.

Die Bewegung des Kolbens 8 in Richtung A wird begrenzt durch die teilweise geschlossene Stirnseite des Laufrohres 7. Entlang des Laufrohres 7 sind mehrere in Fig. 1 nicht eingezeichnete Rückhaltemechanismen angebracht, die eine Rückbewegung des Kolbens 8 in Richtung B verhindern. Ein Rückhaltemechanismus an dem in Richtung A weisenden Ende des Laufrohres 7 verhindert ein Zurückschlagen des Kolbens A nach dessen Anschlag an der teilweise geschlossenen Stirnseite.

Durch die in Fig. 1 dargestellte Sicherheitsvorrichtung wird durch einfache konstruktive Maßnahmen die aktive Bewegung des Luftsacks 15 ermöglicht. Dies kann auf vorteilhafte Weise dazu verwendet werden, den Luftsack 15 fernab der gewünschten Lage im aufgeblasenen Zustand zu lagern oder ihn auf eine neuartige Weise zu falten bzw. zu verpacken. Die erfindungsgemäße Sicherheitsvorrichtung trägt zu einer erhöhten Sicherheit bei, indem sie durch aktive Bewegung des Luftsacks 15 dessen Entfalten beim Aufblasen unterstützt und somit die Zuverlässigkeit des Aufblasvorgangs erhöht.

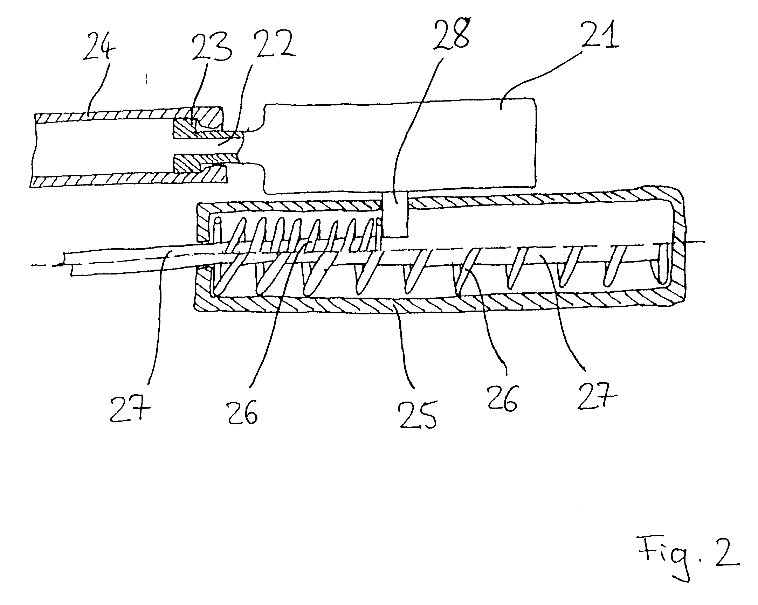

Fig. 2 zeigt in schematischer Schnittdarstellung eine weitere Ausführungsform einer erfindungsgemäßen Sicherheitsvorrichtung. Die Sicherheitsvorrichtung besitzt einen zylinderförmigen Gasgenerator 21. An einer Stirnseite des Gasgenerators 21 verjüngt sich sein Gehäuse zu einer Auslaßöffnung 22. Der die Auslaßöffnung 22 umgebende Gehäuseteil ist an seinem äußeren Rand zu einem Flansch 23 verbreitert. An dem Flansch 23 ist ein in Fig. 2 lediglich teilweise dargestellter Verbindungsschlauch 24 angebracht, indem er über den Flansch 23 aufgezogen und dort durch eine nicht dargestellte Klemmeinrichtung fixiert ist.

An dem Gasgenerator 21 ist durch in Fig. 2 nicht dargestellte Mittel ein hohlzylinderförmiges Straffergehäuse 25 befestigt. Die Längsachsen des Gasgenerators 21 und des Straffergehäuses 25 liegen parallel. Eine Stirnseite des Straffergehäuses 25 ist geschlossen, die andere Stirnseite weist eine zentrale Öffnung auf.

Innerhalb des Straffergehäuses 25 befinden sich eine Spiralfeder 26 sowie ein Strafferband 27, die sich jeweils entlang der Längsachse des Straffergehäuses 24 erstrecken. Das Strafferband 27 ist an einem Ende der Spiralfeder 26 befestigt, verläuft innerhalb der Feder 26 und verläßt das Straffergehäuse 25 durch dessen offene Stirnseite. Das das Straffergehäuse 25 verlassende Strafferband 27 weist im wesentlichen in dieselbe Richtung, wie die Auslaßöffnung 22 des Gasgenerators 21.

Die Feder 26 und das Strafferband 27 sind in der oberen Hälfte ihrer Darstellung in Fig. 2 in vorgespanntem Bereitschaftszustand und in der unteren Hälfte in ausgelöstem Endzustand gezeigt. Im Endzustand erstrecken sich die Feder 26 und das Strafferband 27 über die gesamte Länge des Straffergehäuses 25. In dem in der oberen Hälfte dargestellten Bereitschaftszustand liegt die Spiralfeder 26 mit einem Ende an der Stirnseite des Straffergehäuses 25 an, an der das Strafferband 27 das Gehäuse 25 verläßt. Am anderen Ende liegt sie an einem Bimetallstreifen 28 an, der ungefähr auf halber Länge des Straffergehäuses 25 in das Gehäuse 25 hineinragt. Der Bimetallstreifen 28 durchdringt das Straffergehäuse 25 und ist mit dem Gasgenerator 21 thermisch leitend verbunden.

Die in Fig. 2 dargestellte Sicherheitsvorrichtung ermöglicht das Aufblasen sowie das aktive Bewegen oder Straffen eines mit dem Verbindungsschlauch 24 verbundenen Luftsacks. Hierfür wird der Gasgenerator 21 auf bekannte Weise gezündet, so daß er durch seine Auslaßöffnung 22 und den Verbindungsschlauch 24 Gas an den in Fig. 2 nicht dargestellten Luftsack abgibt.

Der Bimetallstreifen 28 steht derart mit dem Gasgenerator 21 in thermischem Kontakt, daß nach dem Zünden des Gasgenerators 21 ein Wärmeübertrag von diesem auf den Bimetallstreifen 28 erfolgt. Aufgrund der somit hervorgerufenen Temperaturerhöhung des Streifens 28 verformt sich dieser und gibt die vorgespannte Feder 26 frei. Durch Freigabe der in der vorgespannten Feder 26 gespeicherten Energie bewegen sich die Feder 26 und das an ihr befestigte Strafferband 27 in Richtung der geschlossenen Stirnseite des Straffergehäuses 25. Das Strafferband 27 ist an seinem anderen Ende ebenfalls an dem Luftsack befestigt. Somit wird der Luftsack durch die Bewegung der Feder bewegt, gestrafft und in seiner aufgeblasenen Lage gesichert.

An dem Straffergehäuse 25 ist ein in Fig. 2 nicht dargestellter Rückhaltemechanismus angebracht, der die Feder 26 in ausgelöstem und entspanntem Zustand fixiert, um eine Rückbewegung des Strafferbands 27 zu verhindern.

Auch durch die Ausgestaltung einer Sicherheitsvorrichtung gemäß Fig.2 läßt sich bei gegenüber bekannten Sicherheitsvorrichtungen lediglich geringem konstruktiven Mehraufwand eine aktive Bewegung des Luftsacks bewirken. Der Aufbau dieser Sicherheitsvorrichtung ist besonders einfach, da der Bimetallstreifen 28 oder das Straffergehäuse 25 nicht in Strömungsverbindung mit dem Gasgenerator 21 stehen und somit keine zusätzlichen Maßnahmen zur Abdichtung des dem Gas zugänglichen Raums erforderlich sind.

Bei der in Fig. 2 dargestellten Sicherheitsvorrichtung wird das Zugmittel 27 außerhalb des Luftsacks geführt und an dessen Außenseite befestigt. Die Auslaßöffnung 22 des Gasgenerators 21 und die Zugrichtung des Strafferbands 27 können somit in verschiedene Richtungen weisen. Dadurch läßt sich der Luftsack durch das Strafferband 27 bei oder nach seinem Aufblasen leicht in eine Lage abseits seines Aufbewahrungsorts in zusammengefaltetem Zustand bewegen und dort sichern.

Es ist auch möglich, daß das Strafferband 27 an dem Straffermittel eines Personen-Sicherheitsgurts angreift, so daß zum Aufblasen des Luftsacks und zum Straffen des Sicherheitsgurts lediglich eine einzige Sicherheitsvorrichtung erforderlich ist.

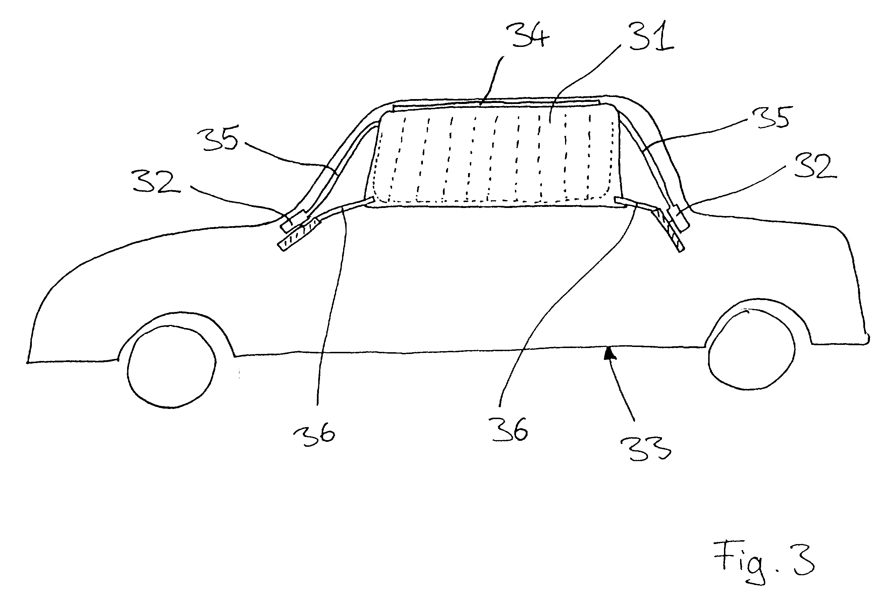

Fig. 3 zeigt in schematischer Seitenansicht die Anordnung eines Luftsacks 31 und zweier Sicherheitsvorrichtungen 32 innerhalb eines Kraftfahrzeugs 33. Die beiden Sicherheitsvorrichtungen 32 sind entsprechend der im Zusammenhang mit der Fig. 2 beschriebenen Ausführungsform ausgebildet, und sie sind am vorderen bzw. am hinteren Ende der Fahrgastzelle jeweils ungefähr auf halber Höhe des Kraftfahrzeugs an dessen Längsseitenwand angeordnet.

Der Luftsack 31 ist entlang eines horizontalen Befestigungsabschnitts 34 an der Innenkante zwischen dem Dach und der Längsseitenwand der Fahrgastzelle befestigt. Fig. 3 zeigt den Luftsack 31 in aufgeblasenem Zustand. Der aufgeblasene Teil des Luftsacks 31 ist im wesentlichen rechteckig und ragt von dem Befestigungsabschnitt 34 vertikal entlang der Längsseitenwand des Kraftfahrzeuges nach unten.

Von den Sicherheitsvorrichtungen 32 verlaufen jeweils ein Verbindungsschlauch 35 zu einem Ende des Befestigungsabschnitts 34 und ein Strafferband 36 an diejenige Ecke des Luftsacks 31, die sich unterhalb des Befestigungspunkts des Verbindungsschlauchs 35 an dem Befestigungsabschnitt 34 befindet.

Die in Fig. 3 dargestellten Sicherheitsvorrichtungen 32 bewirken das Aufblasen und Bewegen des Luftsacks 31 derart, daß die Köpfe und Oberkörper der Fahrzeuginsassen nahezu über die gesamte Länge der Fahrgastzelle gegenüber dem Anprallen von Objekten an die Seite der Fahrgastzelle geschützt sind. Dabei ist der Luftsack 31 im zusammengefalteten Bereitschaftszustand entlang des Befestigungsabschnitts 34 angeordnet.

Nach dem Auslösen des Luftsacks 31 wird dessen Bewegung nach unten durch entsprechende Bewegung der Strafferbänder 35 unterstützt oder erzwungen, so daß sich der Luftsack 31 jalousieartig gleichmäßig entlang des Befestigungsabschnitts 34 nach unten bewegt. Da der Luftsack 31 mit den Sicherheitsvorrichtungen 32 über die Verbindungsschläuche 35 verbunden ist, können die Sicherheitsvorrichtungen 32 an Positionen in den Längsseitenwänden des Fahrzeugs angeordnet sein, an denen sie keine Einschränkung des Innenraums der Fahrgastzelle bedeuten.

Die Anordnung des zusammengefalteten Luftsacks entlang des Befestigungsabschnitts 34 ermöglicht ein schnelles und zuverlässiges Aufblasen des Luftsacks 31 sowohl im vorderen als auch im hinteren Abschnitt der Fahrgastzelle, zumal der den Befestigungsabschnitt 34 umgebende Bereich des Fahrgastzellen-Innenraums üblicherweise frei von Hindernissen ist.

Weiterhin ist es möglich, die beiden Sicherheitsvorrichtungen jeweils an einer Längsseitenwand des Fahrzeuges dergestalt anzuordnen, daß sie sich senkrecht zur Fahrtrichtung gegenüberstehen. Ein Luftsack kann entlang eines Befestigungsabschnitts aufbewahrt und befestigt sein, der im wesentlichen zwischen den beiden Sicherheitsvorrichtungen senkrecht zur Fahrtrichtung verläuft und sich beispielsweise entlang des Dachs der Fahrgastzelle oder der Lehne einer Sitzbank erstreckt.

Auf ähnliche Weise wie im Zusammenhang mit Fig. 3 beschrieben kann der Luftsack durch die beiden Sicherheitsvorrichtungen aufgeblasen, dabei in eine im wesentlichen vertikale Richtung bewegt und in der somit erreichten Lage gestrafft und gesichert werden. Der aufgeblasene Luftsack steht somit senkrecht zur Fahrtrichtung und erstreckt sich in vertikaler Richtung und von einer Fahrzeug-Längsseite zur gegenüberliegenden Längsseite, so daß er die Vorwärtsbewegung der Köpfe oder Oberkörper von bezüglich der Fahrtrichtung hinter dem aufgeblasenen Luftsack befindlichen Insassen bremst oder blockiert. Eine derartige Anordnung der Sicherheitsvorrichtungen und des Luftsacks ist besonders vorteilhaft in Personen-Transportfahrzeugen, insbesondere in Kleinbussen.

### Bezugszeichenliste

- 1: Rohrgehäuse
- 2: Generatorgehäuse
- 3: Verbindungsöffnung
- 4: Straffer-Verbindungskanal
- 5: Luftsack-Verbindungskanal
- 6: Flansch
- 7: Laufrohr
- 8: Kolben
- 9: Kolbenstange
- 10: Kolbenstangen-Abschnitt
- 11: Kolbenstangen-Abschnitt
- 12: Kolbenstangen-Ende
- 13: Gasgenerator
- 14: Auslaßöffnung
- 15: Luftsack
- 16: Ringklemme
- 21: Gasgenerator
- 22: Auslaßöffnung
- 23: Flansch
- 24: Verbindungsschlauch
- 25: Straffergehäuse
- 26: Feder
- 27: Strafferband
- 28: Bimetallstreifen
- 31: Luftsack
- 32: Sicherheitsvorrichtung
- 33: Kraftfahrzeug
- 34: Befestigungsabschnitt
- 35: Verbindungsschlauch
- 36: Strafferband

## Patentansprüche

1. Sicherheitsvorrichtung für ein Kraftfahrzeug mit einem Gasgenerator (13, 21) zum Aufblasen eines Luftsacks (15, 31) und einer Straffereinrichtung zum Bewegen wenigstens eines Zugmittels, wobei die Straffereinrichtung durch Zünden des Gasgenerators (13, 21) auslösbar ist.

2. Sicherheitsvorrichtung nach Anspruch 1,
**dadurch gekennzeichnet,**
daß das Zugmittel an einem Luftsack (15, 31) befestigt ist, um diesen vor oder während des Aufblasens zu spannen.

3. Sicherheitsvorrichtung nach einem der Ansprüche 1 oder 2,
**dadurch gekennzeichnet,**
daß eine Bewegung der Straffereinrichtung durch den vom Gasgenerator (13, 21) erzeugten Gasdruck erfolgt und/oder daß die Straffereinrichtung durch Auslösen eines Druckspeichers, insbesondere einer vorgespannten Feder (26), bewegbar ist.

4. Sicherheitsvorrichtung nach einem der vorhergehenden Ansprüche,
**dadurch gekennzeichnet,**
daß die Straffereinrichtung durch Druck, mechanische Krafteinwirkung oder durch Wärme auslösbar ist und/oder daß die Straffereinrichtung einen Kolben (8) aufweist, der mit einer Auslaßöffnung des Gasgenerators (13, 21) in Strömungsverbindung steht, und/oder daß das Zugmittel eine Kolbenstange (9), ein Strafferseil und/oder ein Strafferband (27, 36) aufweist, die jeweils bewegbar sind.

5. Sicherheitsvorrichtung nach einem der vorhergehenden Ansprüche,
**dadurch gekennzeichnet,**
daß sie einen Verbindungskanal (5) aufweist, durch den der Gasgenerator (13, 21) mit einer Öffnung (22), an der ein Luftsack (15, 31) befestigbar ist, in Strömungsverbindung steht, sowie einen Verbindungskanal (4), durch den der Gasgenerator (13, 21) mit der Straffereinrichtung in Strömungsverbindung, mechanischer und/oder thermischer Wirkverbindung steht.

6. Sicherheitsvorrichtung nach einem der vorhergehenden Ansprüche,
**dadurch gekennzeichnet,**
daß das Zugmittel innerhalb einer Öffnung geführt ist, an der ein Luftsack befestigt ist oder daß das Zugmittel innerhalb einer Öffnung geführt ist, die durch das Zugmittel gegen ein Durchströmen mit Gas im wesentlichen abgedichtet ist.

7. Sicherheitsvorrichtung nach einem der vorhergehenden Ansprüche,
**dadurch gekennzeichnet,**
daß eine Steuerung vorgesehen ist, die den zeitlichen Ablauf des Aufblasens des Luftsacks (15, 31) und der Bewegung der Straffereinrichtung steuert, wobei vorzugsweise die Steuerung eine Öffnung (5) aufweist, die ein Durchströmen mit vom Gasgenerator abgegebenem Gas ermöglicht, sowie ein Schließelement (9), das in Abhängigkeit von der Position des Zugmittels ein Durchströmen der Öffnung behindert oder verhindert.

8. Sicherheitsvorrichtung nach einem der vorhergehenden Ansprüche,
**dadurch gekennzeichnet,**
daß sie einen Rückhaltemechanismus zur Fixierung der Straffereinrichtung in einer ausgelösten Position aufweist und/oder daß sie einen Bimetallstreifen (28) aufweist, auf den durch den Gasgenerator (13, 21) nach dessen Zünden Wärme übertragbar ist und durch den ein Druckspeicher auslösbar ist.

9. Sicherheitsvorrichtung nach einem der vorhergehenden Ansprüche,
**dadurch gekennzeichnet,**
daß das Zugmittel an einem Luftsack (15, 31), der mit dem Gasgenerator (13, 21) verbunden ist, und an einem weiteren Befestigungspunkt innerhalb des Kraftfahrzeugs befestigt ist und/oder daß das Zugmittel an einem Straffermittel eines Sicherheitsgurts angreift.

10. Verwendung einer Luftsackvorrichtung, die einen Luftsack (15, 31) und einen Gasgenerator (13, 21) zum Aufblasen des Luftsacks (15, 31) aufweist, zur Betätigung einer zugeordneten Straffereinrichtung.

11. Verwendung einer Luftsackvorrichtung, die einen Luftsack (15, 31) und einen Gasgenerator (13, 21) zum Aufblasen des Luftsacks (15, 31) aufweist, zum Spannen des Luftsacks (15, 31) und/oder eines Sicherheitsgurts.
